# EUROPÄISCHE PATENTSCHRIFT

(11) **EP 2 244 893 B1**
(45) Veröffentlichungstag und Bekanntmachung des Hinweises auf die Patenterteilung: **07.09.2011**
(21) Anmeldenummer: 09714686.4
(22) Anmeldetag: 23.01.2009
(51) Int. Cl.: B60G 7/00, B60G 9/00, B23K 20/12, B23P 15/00

(54) **GELENK- UND/ODER LAGEREINHEIT**
ARTICULATED JOINT AND/OR BEARING UNIT
ENSEMBLE ARTICULATION ET/OU PALIER

(30) Priorität: 29.02.2008 DE 102008000469
(43) Veröffentlichungstag der Anmeldung: 03.11.2010
(73) Patentinhaber: ZF Friedrichshafen AG, 88038 Friedrichshafen (DE)
(72) Erfinder: BRUNNEKE, Hans-Gerd, 49124 Georgsmarienhütte (DE); LÖSCHE, Christian, 32351 Stemwede (DE)
(86) Internationale Anmeldenummer: PCT/DE2009/050003
(87) Internationale Veröffentlichungsnummer: WO 2009/106071

(56) Entgegenhaltungen:
- EP-A- 0 925 964
- EP-A- 0 993 897
- EP-A- 1 318 035
- DE-A1- 4 004 679
- DE-A1- 19 911 121
- DE-A1- 19 932 678
- DE-A1- 19 953 156
- DE-C- 702 442
- DE-U1- 20 122 519
- FR-A- 2 753 932
- US-A- 2 180 860

## Beschreibung

Die Erfindung betrifft eine Gelenk- und/oder Lagereinheit mit zumindest zwei in einem Gabelkopf zusammengeführten Lenkern, wobei dem Gabelkopf ein Aufnahmebereich für ein Gelenk oder Lager zugeordnet ist, nach dem Oberbegriff des Anspruchs 1 sowie ein Kraftfahrzeug mit einer oder mehreren derartigen Gelenk- und/oder Lagereinheit(en), insbesondere in Fahrwerksund/oder Lenkungsteilen.

Es ist bekannt, für viele Einsatzzwecke, insbesondere in Fahrwerks- und Lenkungsbereichen von Kraftfahrzeugen, sogenannte Dreiecklenker vorzusehen, bei denen zwei Lenker V-förmig aufeinander zulaufen und dabei in einen Aufnahmebereich münden. Dieser kann zur Aufnahme eines Gelenks oder Lagers dienen und zum Beispiel an einer Achse festgelegt sein, um diese über den Dreiecklenker beweglich an einer Karosserie oder einem Fahrzeugrahmen zu halten.

Die aufeinander zulaufenden Enden der Lenker müssen aneinander gehalten werden, wozu zum Beispiel gemäß der DE 10219708 A1 separate Bolzen vorgesehen sind, die die Lenkerenden axial durchgreifen und diese dadurch aneinander sichern. Eine solche Lösung ist jedoch in der Montage sehr aufwendig.

Aus der DE 19932678 A1 ist hingegen eine Lösung bekannt, bei der die beiden Lenkerenden mit einem Zentralgehäuse verbunden sind, das die Aufnahmeeinheit umfasst. Diese Gehäuse sind zum Beispiel als separate Schmiede- oder Gussteile ausgebildet und mit den beiden Lenkerenden in einer vorgegebenen Anschlussgeometrie verbindbar. Will man den Winkel der Lenker zueinander oder den Durchmesser der Aufnahme für ein Gelenk oder Lager in dem Zentralgehäuse ändern, ist dafür jeweils ein eigenes Zentralgehäuse mit einer passenden Geometrie vorzusehen. Eine solche Lösung ist daher unflexibel und erfordert einen erheblichen Vorrat an unterschiedlichen Teilen und dadurch bedingt hohe Lager- und Werkzeugkosten.

Weitere relevante Gelenn- und/oder Lagereinheiten sind aus der Dokumenten EP1318035A, EP0925964A bekannt.

Der Erfindung liegt das Problem zugrunde, hier eine Verbesserung zu erreichen.

Die Erfindung löst dieses Problem durch eine Gelenk- oder Lagereinheit mit den Merkmalen des Anspruchs 1 , einen Bausatz mit den Merkmalen des Anspruchs 5 sowie durch ein Kraftfahrzeug mit den Merkmalen des Anspruchs 11. Hinsichtlich vorteilhafter Ausgestaltungen und Weiterbildungen der Erfindung wird auf die weiteren Ansprüche 2 und 4, 6 bis 10 und 12 verwiesen.

Mit der Erfindung ist eine Verminderung der Anzahl der benötigten Varianten erreicht. Dadurch, dass der Gabelkopf aus einer ersten, den Aufnahmebereich umfassenden Baueinheit und einer zweiten, eine Gabelung zu den Lenkern umfassenden Baueinheit gebildet ist, können diese erste Baueinheit, im folgenden auch als Aufnahmeeinheit, und die zweite Baueinheit, im folgenden auch als Gabelungseinheit bezeichnet, bei der Montage beliebig miteinander kombiniert werden. Waren bisher zum Beispiel neun verschiedene Gabelköpfe vorzuhalten, wenn man drei verschiedene Öffnungswinkel der Lenker gegeneinander und drei verschiedene Durchmesser der Aufnahme für das Lager oder Gelenk haben wollte, so sind es jetzt durch die freie Kombinierbarkeit nur noch sechs. Dadurch ist die Logistik erheblich erleichtert, es müssen zudem weniger verschiedene Teile gegossen werden; die Anzahl der hierfür benötigten Formen ist verringert, die Produktionskosten sind deutlich gesenkt.

Wenn in der Ausbildung nach Anspruch 1 der Aufnahmebereich an einer zunächst gegenüber einer die Gabelung umfassenden zweiten Baueinheit separaten, jedoch bei der Montage der Gelenk- und/oder Lagereinheit dauerhaft an diese anmontierten ersten Baueinheit ausgebildet ist, ist bei der Montage trotz der Zweiteilung des Gabelkopfes eine hohe Stabilität wie bei einem einteiligen Gabelkopf erreichbar. Insbesondere kann die erste Baueinheit durch Schweißen, vorzugsweise Reibschweißen, mit der zweiten

Baueinheit dauerhaft verbindbar sein, da dann kein zusätzliches Schweißmaterial oder eine äußere Wärmequelle benötigt werden.

Sehr günstig wird dabei die den Aufnahmebereich umfassende erste Baueinheit an einen ersten, mittleren Flansch der zweiten Baueinheit angesetzt, der einer mittleren Spitze eines gleichschenkligen Dreieckslenkers zugeordnet ist. Dadurch ist die erforderliche Symmetrie der in Draufsicht dreieckigen Anordnung sichergestellt. Das Ansetzen an den mittleren Flansch kann stumpf und ohne Überlappung durchgeführt werden.

Ein zur Herstellung der erfindungsgemäßen Teile gehöriger Bausatz umfasst vorzugsweise ein Sortiment von den Aufnahmebereich umfassenden Aufnahmeeinheiten mit unterschiedlichen Durchmessern und zumindest eine - vorzugsweise auch hier mehrere mit verschiedenen Öffnungswinkeln - die Gabelung zu den Lenkern umfassende Gabelungseinheit(en). Diese Teile können stets einen gleichartigen Verbindungsflansch zueinander aufweisen und damit beliebig kombinierbar sein, so dass zum Beispiel eine Aufnahmeeinheit mit einem definierten Durchmesser seines Aufnahmebereichs an eine Gabelungseinheit mit verschiedenen Öffnungswinkeln angesetzt werden kann.

Vorzugsweise kann diese Anmontage der Aufnahmeeinheit in unterschiedlichen Orientierungen an die Gabelungseinheit erfolgen, zum Beispiel wahlweise in der Ebene der Lenker oder senkrecht hierzu, wodurch die Flexibilität für verschiedene Einsatzzwecke weiter erhöht ist.

Wenn jede Gabelungseinheit neben dem ersten, mittleren Flansch zum Ansetzen der Aufnahmeeinheit zwei dem ersten Flansch gegenüber gelegene und jeweils mit einem Lenker verbindbare weitere Flansche umfasst, die hier als Schaftbereiche ausgebildet sind, können verschiedene Gabelungseinheiten zwischen die beiden Lenker einerseits und die Aufnahmeeinheit andererseits zwischengesetzt werden.

Besonders einfach und zeitsparend sind die weiteren Schaftbereiche bei der Montage mit rohrförmigen Lenkern warm verpressbar. Diese können wiederum an ihren dem Gabelkopf abgewandten Enden jeweils mit Gelenken zu ihrer Halterung an einem Fahrzeugrahmen verbindbar sein.

Ein Kraftfahrzeug mit zumindest einer erfindungsgemäßen Gelenk- und/oder Lageranordnung, insbesondere innerhalb von Fahrwerks- und/oder Lenkungsteilen, zum Beispiel auch zur Achsabstützung bei LKW, ist separat beansprucht.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine erste Ausbildung eines geteilten Gabelkopfes mit hier senkrecht zur Lenkerebene vorgesehener Montage der Aufnahmeeinheit am mittleren Flansch der Gabelungseinheit, hier in einer eingesteckten Verschweißung der Aufnahmeeinheit,
- Fig. 2: eine ähnliche Ansicht wie Fig. 1, jedoch jetzt bei einer vorgesehenen stumpfen Verschweißung der Aufnahmeeinheit am mittleren Flansch der Gabelungseinheit,
- Fig. 3: einen einzigen Typ von Gabelungseinheiten in verschweißter Stellung mit einem einzigen Typ von Aufnahmeeinheiten in drei verschiedenen Ausrichtungen der Verbindung,
- Fig. 4: einen einzigen Typ von Aufnahmeeinheiten in jeweils gleich orientierter, verschweißter Stellung mit drei verschiedenen Typen von Gabelungseinheiten,
- Fig. 5: eine erfindungsgemäße Gelenk- oder Lagereinheit in perspektivischer Übersichtsdarstellung mit senkrecht zur Ebene der Lenker anmontierter Aufnahmeeinheit.

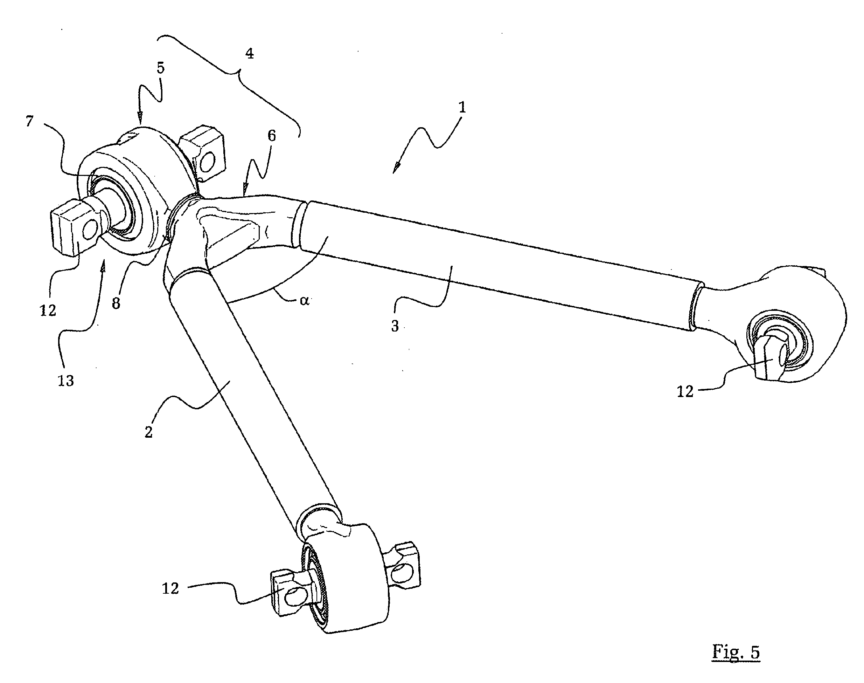

Die in Fig. 5 insgesamt dargestellte Gelenkeinheit 1 umfasst zwei spitzwinkling aufeinander zulaufende Lenker 2, 3, die hier geradlinig sind, was nicht zwingend ist. Sie münden in einen Gabelkopf 4, der aus mehreren Teilen, nämlich einer ersten Baueinheit 5, und einer zweiten Baueinheit 6, zusammengesetzt ist.

Die erste Baueinheit 5 wird hier auch als Aufnahmeeinheit bezeichnet, da sie einen hülsenartigen Aufnahmebereich 7 zur Aufnahme eines Gelenks oder Lagers mit einem Gelenkzapfen, einer Gelenkschale und einem diese Teile ganz oder teilweise umgebenden Gehäuse umfasst.

Die zweite Baueinheit 6 wird hier auch als Gabelungseinheit bezeichnet, da sie von einem zentralen Flansch 8 aus sich in einem Winkel α aufgabelt in zwei Arme, die zur Anmontage an die Lenker 2, 3 ausgebildet sind. Auch eine Aufgabelung in mehr als zwei Arme zur Anmontage von mehr als zwei Lenkern 2, 3 ist möglich.

Vor der Montage der Gelenk- und/oder Lagereinheit 1 sind die Baueinheiten 5, 6 nach Art eines Bausatzes voneinander getrennt. Sie werden bei der Montage fest miteinander verbunden, zum Beispiel verschweißt. Bei dieser Montage wird die den Aufnahmebereich 7 umfassende erste Baueinheit 5 an den mittleren Flansch 8 der zweiten Baueinheit angesetzt, von dem aus die Aufgabelung sich zu zwei gegenüberliegenden und symmetrischen Schaftbereichen 10, 11 für die Lenker 2, 3 derart erstreckt, dass der erste Flansch 8 einer mittleren Spitze eines gleichschenkligen Dreiecks aus den Lenkern 2, 3 zugeordnet ist und dadurch insgesamt die fertige Einheit 1 eine Dreieckslenkereinheit ausbildet.

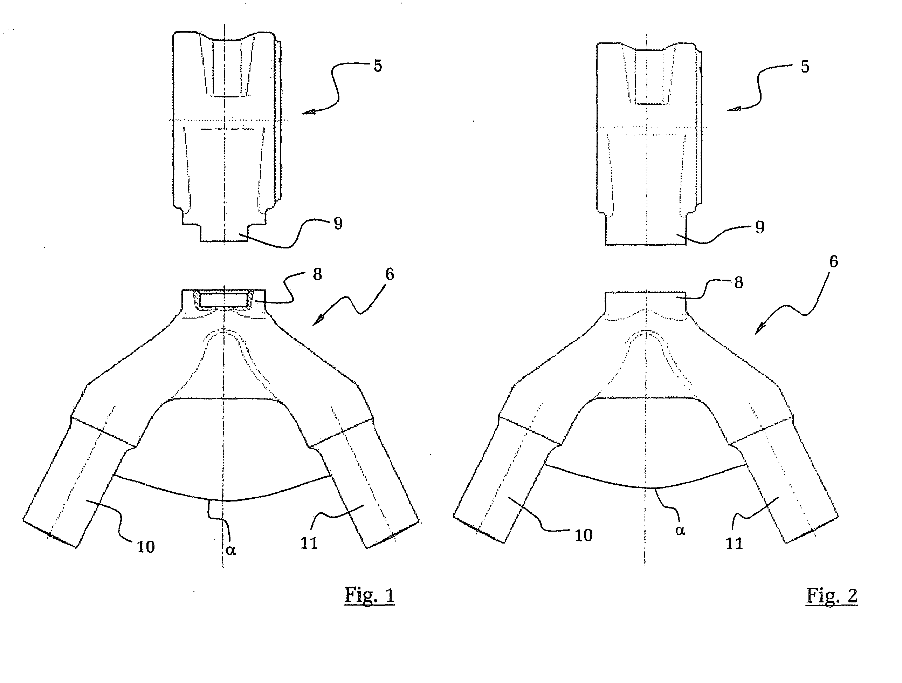

Hier wird zur Verbindung der Aufnahmeeinheit 5 mit dem zentralen Flansch 8 der Gabelungseinheit 6 ein Reibverschweißen angewandt, bei dem durch Druck und Reibung ohne Zugabe von äußerem Schweißgut das dauerhafte Verschweißen der Baueinheiten 5, 6 zwischen dem Anschlusszapfen 9 der ersten Baueinheit 5 und dem Flansch 8 der zweiten Baueinheit 6 erfolgt. Das Verschweißen kann stumpf voreinander erfolgen, wie in Figur 2 dargestellt ist. Auch ein Eingreifen des Anschlusszapfens 9 der Aufnahmeeinheit 5 in eine hülsenartig ausgebildeten Flansch 8 der Gabelungseinheit 6 ist möglich und in Figur 1 angedeutet. Durch die Art der Symmetrie und das geringe Trägheitsmoment ist eine Rotation der Aufnahmeeinheit 5 um die den Flansch 8 durchdringende Achse für das Reibschweißen erleichtert.

Die gegenüberliegenden weiteren Schaftbereiche 10, 11 können einfach und schnell bei der Montage mit zum Beispiel rohrförmigen Lenkern 2, 3 warm verpressbar sein.

In den Figuren 1 und 2 sind jeweils Teile des Bausatzes aus Aufnahmeeinheiten 5 und Gabelungseinheiten 6 gezeigt, die bei der Montage miteinander und nachfolgend mit den Lenkern 2, 3 zu verbinden sind.

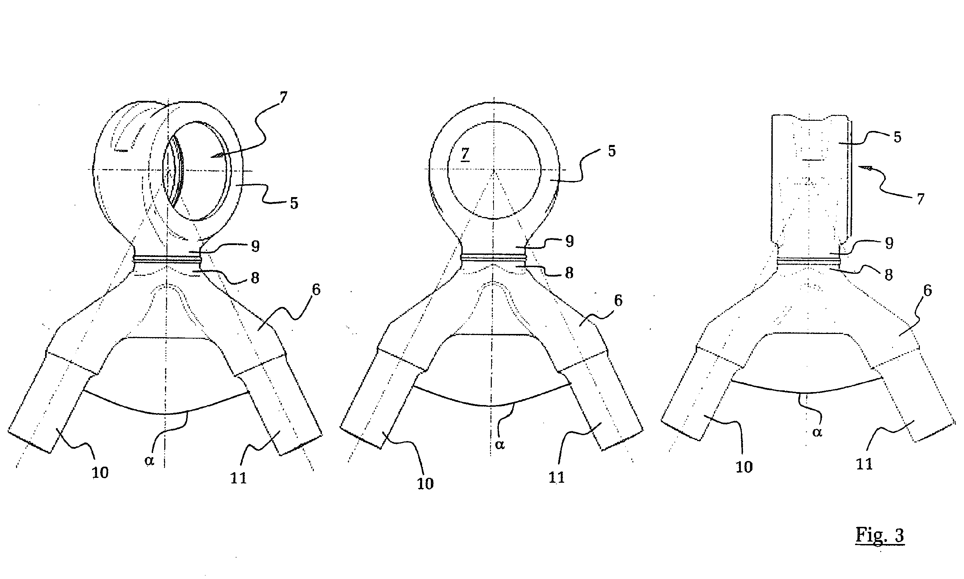

Wie in Figur 3 dargestellt ist, ist die Aufnahmeeinheit 5 in unterschiedlichen Orientierungen an die Gabelungseinheit 6 bei der Montage ansetzbar. So kann der Aufnahmebereich beispielsweise so liegen, dass eine diesen lotrecht durchdringende Achse in der Ebene der Lenker 2, 3 liegt (rechtes Bild), um damit zum Beispiel im LKW-Bereich eine Achse abzustützen. Damit erreicht die fertige Dreieckslenkereinheit 1 die in Fig. 5 gezeigte Geometrie, bei der die rohrförmigen Lenker 2, 3 an ihren dem Gabelkopf 4 abgewandten Enden jeweils mit Gelenken zu ihrer Halterung an einem Fahrzeugrahmen verbindbar sind und die Gelenkzapfen 12 dieser Gelenke parallel zueinander und hier auch parallel zum Gelenkzapfen 12 des in die Aufnahmeeinheit 7 in der Dreiecksspitze eingesetzten Gelenks 13 ausgerichtet sind.

In der Ausrichtung des mittleren Bilds wird die Achse des in die Aufnahmeeinheit 7 einzumontierenden Gelenks hingegen senkrecht zur Ebene der Lenker 2, 3 stehen; im linken Bild ist beispielhaft ein Winkel von etwa 45° vorgesehen.

Zur Sicherstellung der drei verschiedenen Stellungen sind jedoch stets gleichartige Baueinheiten 5 und 6 vorgesehen, so dass insgesamt nur zwei Teile vorgesehen sind. Gemäß der einteiligen Ausbildung des Gabelkopfes nach dem Stand der Technik wären hingegen drei Teile nötig gewesen - mit den damit verbundenen höheren Kosten.

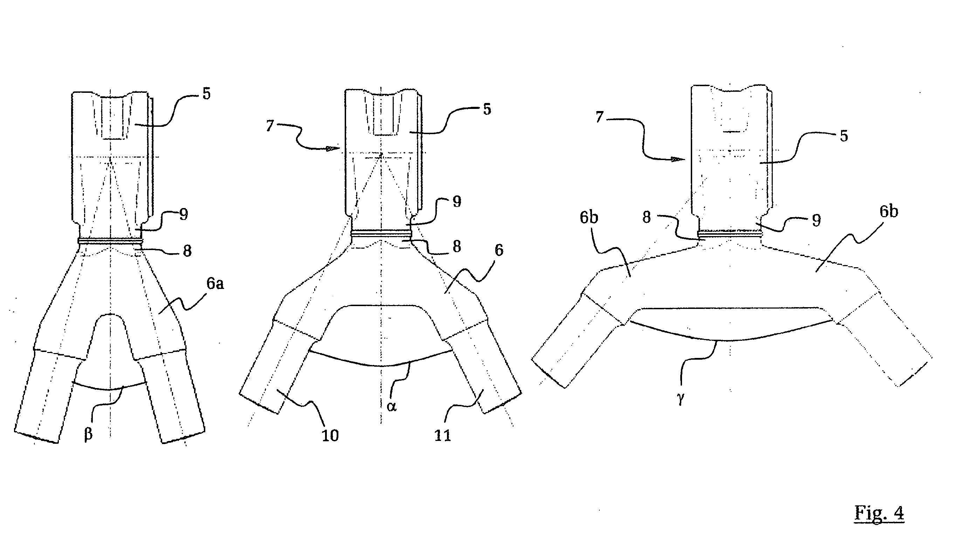

In Figur 4 ist weiterhin dargestellt, dass eine Mehrzahl von Gabelungseinheiten mit unterschiedlichen Geometrien im Bausatz vorgesehen sein kann. Zwischen dem dort mittleren Bild, das der Gabelungseinheit 6 aus Fig. 3 entspricht, und dem linken Bild ist der Öffnungswinkel α zu einem Öffnungswinkel β verkleinert. Im Übergang vom mittleren zum rechten Bild ist nicht nur der Öffnungswinkel zum Winkel γ vergrößert, sondern die Gabelungseinheit 6 ist hier beispielhaft zusätzlich verbreitert. Auch andere Geometrieänderungen sind möglich. Auch diese Bausätze werden bei der Montage wiederum mit Lenkern 2, 3 über die Schaftbereiche 10, 11 zu Dreieckslenkereinheiten 1 verbunden. In der Praxis sind Öffnungswinkel von 40° bis 60° üblich.

Solche Gelenk- und/oder Lagereinheiten 1, wie in Fig. 5 dargestellt, können beispielsweise längs im Fahrzeug zur Abstützung einer Achse - insbesondere bei LKW - angeordnet sein. Das Gelenk in der Aufnahmeeinheit 7 liegt dann quer zum Fahrzeug und kann die Achse beweglich halten.

Auch andere Anordnungen in insbesondere Fahrwerks- und/oder Lenkungsteilen bieten sich an.

### Bezugszeichenliste

- 1: Gelenk- oder Lagereinheit
- 2: Lenker
- 3: Lenker
- 4: Gabelkopf
- 5: erste Baueinheit (Aufnahmeeinheit)
- 6: zweite Baueinheit (Gabelungseinheit)
- 7: Aufnahmebereich,
- 8: zentraler Flansch
- 9: Anschlusszapfen
- 10: rückseitiger Schaftbereich
- 11: rückseitiger Schaftbereich
- 12: Gelenkzapfen
- 13: Gelenk oder Lager

## Patentansprüche

1. Gelenk- und/oder Lagereinheit (1) mit zumindest zwei in einem Gabelkopf (4) zusammengeführten Lenkern (2;3), wobei dem Gabelkopf (4) ein Aufnahmebereich (7) für ein Gelenk oder Lager (13) zugeordnet ist, wobei
der Gabelkopf (4) gebildet ist aus einer ersten, den Aufnahmebereich (7) umfassenden Baueinheit (5) und einer zweiten, eine Gabelung zu den Lenkern (2;3) umfassenden Baueinheit (6),
**dadurch gekennzeichnet,**
**dass** der Aufnahmebereich (7) an einer zunächst gegenüber einer die Gabelung umfassenden zweiten Baueinheit (6) separaten, jedoch bei der Montage der Gelenk- und/oder Lagereinheit (1) dauerhaft an diese anmontierten ersten Baueinheit (5) ausgebildet ist

2. Gelenk- und/oder Lagereinheit (1) nach Anspruch 1,
**dadurch gekennzeichnet,**
**daß** die den Aufnahmebereich (7) umfassende erste Baueinheit (5) über eine stoffschlüssige Verbindung, insbesondere ein Verschweißen, mit der die Gabelung umfassenden zweiten Baueinheit (6) verbunden ist.

3. Gelenk- und/oder Lagereinheit (1) nach Anspruch 2,
**dadurch gekennzeichnet,**
**daß** die den Aufnahmebereich (7) umfassende Baueinheit (5) über ein Reibverschweißen mit der die Gabelung umfassenden zweiten Baueinheit (6) verbunden ist.

4. Gelenk- und/oder Lagereinheit (1) nach einem der Ansprüche 1 bis 3,
**dadurch gekennzeichnet,**
**daß** die den Aufnahmebereich (7) umfassende erste Baueinheit (5) an einen ersten, mittleren Flansch (8) der zweiten Baueinheit (6) angesetzt ist, der einer mittleren Spitze eines gleichschenkligen Dreieckslenkers zugeordnet ist.

5. Bausatz zur Bildung von Gelenk- und/oder Lagereinheiten (1) nach einem der Ansprüche 1 bis 4,
**dadurch gekennzeichnet,**
**daß** dieser Bausatz zumindest eine den Aufnahmebereich (7) umfassende Aufnahmeeinheit (5) und zumindest eine die Gabelung zu den Lenkern (2;3) umfassende Gabelungseinheit (6) umfaßt.

6. Bausatz nach Anspruch 5,
**dadurch gekennzeichnet,**
**daß** die Aufnahmeeinheit (5) in unterschiedlichen Orientierungen an die Gabelungseinheit (6) ansetzbar ist.

7. Bausatz nach Anspruch 6,
**dadurch gekennzeichnet,**
**daß** eine Mehrzahl von Gabelungseinheiten mit unterschiedlichen Öffnungswinkeln (α, β, γ) vorgesehen ist.

8. Bausatz nach einem der Ansprüche 6 oder 7,
**dadurch gekennzeichnet,**
**daß** die oder jede Gabelungseinheit (6) einen ersten, mittleren Flansch (8) zum Ansetzen der Aufnahmeeinheit (5) und zwei dem ersten Flansch gegenüber gelegene und jeweils mit einem Lenker (2;3) verbindbare weitere Flansche (10;11) als Schaftbereiche zur Ausbildung eines Dreieckslenkers umfaßt.

9. Bausatz nach einem Anspruch 8,
**dadurch gekennzeichnet,**
**daß** die weiteren Schaftbereiche (10;11) bei der Montage mit rohrförmigen Lenkern (2;3) warm verpreßbar sind.

10. Bausatz nach einem der Ansprüche 6 bis 9,
**dadurch gekennzeichnet,**
**daß** die rohrförmigen Lenker (2;3) an ihren dem Gabelkopf (4) abgewandten Enden jeweils mit Gelenken zu ihrer Halterung an einem Fahrzeugrahmen verbindbar sind.

11. Kraftfahrzeug mit zumindest einer Gelenk- und/oder Lagereinheit (1) nach einem der Ansprüche 1 bis 9, insbesondere innerhalb von Fahrwerks- und/oder Lenkungsteilen.

12. Kraftfahrzeug nach Anspruch 11,
**dadurch gekennzeichnet,**
**daß** dieses ein LKW ist, der einen oder mehrere dreieckig zusammenlaufende Lenker umfassende Gelenk- und/oder Lagereinheiten (1) zur Achsabstützung aufweist.

## Claims

1. Joint and/or bearing unit (1) having at least two links (2; 3) which are brought together in a swivel joint yoke (4), the swivel joint yoke (4) being assigned a receiving region (7) for a joint or bearing (13), the swivel joint yoke (4) being formed from a first structural unit (5) which comprises the receiving region (7) and a second structural unit (6) which comprises a fork to the links (2; 3), **characterized in that** the receiving region (7) is formed on a first structural unit (5) which is first of all separate from a second structural unit (6) which comprises the fork, but, during the mounting of the joint and/or bearing unit (1), is mounted permanently on the latter.

2. Joint and/or bearing unit (1) according to Claim 1, **characterized in that** the first structural unit (5) which comprises the receiving region (7) is connected via a material-to-material connection, in particular a weld, to the second structural unit (6) which comprises the fork.

3. Joint and/or bearing unit (1) according to Claim 2, **characterized in that** the structural unit (5) which comprises the receiving region (7) is connected via a rotary friction weld to the second structural unit (6) which comprises the fork.

4. Joint and/or bearing unit (1) according to one of Claims 1 to 3, **characterized in that** the first structural unit (5) which comprises the receiving region (7) is attached to a first, central flange (8) of the second structural unit (6), which flange (8) is assigned to a central tip of an equal-length triangular control arm.

5. Assembly set for forming joint and/or bearing units (1) according to one of Claims 1 to 4, **characterized in that** this assembly set comprises at least one receiving unit (5) which comprises the receiving region (7) and at least one fork unit (6) which comprises the fork to the links (2; 3).

6. Assembly set according to Claim 5, **characterized in that** the receiving unit (5) can be attached to the fork unit (6) in different orientations.

7. Assembly set according to Claim 6, **characterized in that** a plurality of fork units with different opening angles (α, β, γ) are provided.

8. Assembly set according to either of Claims 6 and 7, **characterized in that** the or each fork unit (6) comprises a first, central flange (8) for attaching the receiving unit (5) and two further flanges (10; 11) which lie opposite the first flange and in each case can be connected to a link (2; 3) as shaft regions for forming a triangular control arm.

9. Assembly set according to Claim 8, **characterized in that**, during mounting, the further shaft regions (10; 11) can be hot-pressed with tubular links (2; 3).

10. Assembly set according to one of Claims 6 to 9, **characterized in that**, at their ends which face away from the swivel joint yoke (4), the tubular links (2; 3) can be connected in each case to joints for holding them on a vehicle frame.

11. Motor vehicle having at least one joint and/or bearing unit (1) according to one of Claims 1 to 9, in particular within chassis and/or steering parts.

12. Motor vehicle according to Claim 11, **characterized in that** the said motor vehicle is a lorry which has one or more joint and/or bearing units (1) which comprise triangularly converging links for axle support.

## Revendications

1. Ensemble articulation et/ou palier (1) doté d'au moins deux bielles (2 ; 3) guidées conjointement dans une tête de fourche (4), une zone de logement (7) prévue pour une articulation ou un palier (13) étant associée à la tête de fourche (4), la tête de fourche (4) étant formée à partir d'une première unité de construction (5) comprenant la zone de logement (7) et d'une deuxième unité de construction (6) comprenant une enfourchure conduisant aux bielles (2 ; 3), **caractérisé en ce que** la zone de logement (7) est réalisée au niveau d'une première unité de construction (5) séparée par rapport à une deuxième unité de construction (6) comprenant l'enfourchure mais toutefois montée contre elle de façon durable lors du montage de l'ensemble articulation et/ou palier (1).

2. Ensemble articulation et/ou palier (1) selon la revendication 1, **caractérisé en ce que** la première unité de construction (5) comprenant la zone de logement (7) est reliée à la deuxième unité de construction (6) comprenant l'enfourchure via une liaison réalisée par complémentarité de matières, notamment par soudure.

3. Ensemble articulation et/ou palier (1) selon la revendication 2, **caractérisé en ce que** l'unité de construction (5) comprenant la zone de logement (7) est reliée à la deuxième unité de construction (6) comprenant l'enfourchure via une soudure par friction.

4. Ensemble articulation et/ou palier (1) selon l'une quelconque des revendications 1 à 3, **caractérisé en ce que** la première unité de construction (5) comprenant la zone de logement (7) est placée contre un premier flasque (8) central de la deuxième unité de construction (6), ledit flasque étant associé à une pointe centrale d'une bielle triangulaire équilatérale.

5. Ensemble de construction pour former des ensembles articulation et/ou palier (1) selon l'une quelconque des revendications 1 à 4, **caractérisé en ce que** cet ensemble de construction comprend au moins une unité de logement (5) comprenant la zone de logement (7) et au moins une unité d'enfourchure (6) comprenant l'enfourchure conduisant aux bielles (2 ; 3).

6. Ensemble de construction selon la revendication 5, **caractérisé en ce que** l'unité de logement (5) peut être déplacée contre l'unité d'enfourchure (6) suivant différentes orientations.

7. Ensemble de construction selon la revendication 6, **caractérisé en ce qu'**une pluralité d'unités d'enfourchure sont pourvues de différents angles d'ouverture (α, β, γ).

8. Ensemble de construction selon l'une quelconque des revendications 6 ou 7, **caractérisé en ce que** la ou les unités d'enfourchure (6) comprennent un premier flasque (8) central pour placer l'unité de logement (5) et deux autres flasques (10 ; 11) placés à l'opposée du premier flasque et pouvant respectivement être reliés à une bielle (2 ; 3) sous la forme de zones de tige permettant de former une bielle de forme triangulaire.

9. Ensemble de construction selon la revendication 8, **caractérisé en ce que** les autres zones de tige (10 ; 11) sont compressées à chaud lors du montage avec des bielles (2 ; 3) en forme de tube.

10. Ensemble de construction selon l'une quelconque des revendications 6 à 9, **caractérisé en ce que** les bielles (2 ; 3) en forme de tube peuvent être respectivement reliées, au niveau de leurs extrémités opposées à la tête de fourche (4), aux articulations pour être fixées à un châssis de véhicule.

11. Véhicule automobile doté d'au moins un ensemble articulation et/ou palier (1) selon l'une quelconque des revendications 1 à 9, notamment à l'intérieur de pièces de châssis et/ou de direction.

12. Véhicule automobile selon la revendication 11, **caractérisé en ce que** celui-ci est un poids lourd qui comporte un ou plusieurs ensembles articulation et/ou palier (1) comprenant des bielles avançant conjointement à la façon d'un triangle pour soutenir l'essieu.
